# FASCICULE DE BREVET EUROPEEN

(11) **EP 3 154 677 B1**
(45) Date de publication et mention de la délivrance du brevet: **06.02.2019**
(21) Numéro de dépôt: 15727662.7
(22) Date de dépôt: 09.06.2015
(51) Int. Cl.: B01J 21/04, B01J 35/00, B01J 35/10, C01F 7/02, C01F 7/14

(54) **ALUMINE MESOPOREUSE AMORPHE AYANT UNE CONNECTIVITE ELEVEE ET SON PROCEDE DE PREPARATION**
AMORPHES MESOPORÖSES ALUMINIUMOXID MIT HOHER KONNEKTIVITÄT UND HERSTELLUNGSVERFAHREN DAFÜR
AMORPHOUS MESOPOROUS ALUMINA WITH HIGH CONNECTIVITY AND PRODUCTION METHOD THEREOF

(30) Priorité: 13.06.2014 FR 1455423
(43) Date de publication de la demande: 19.04.2017
(73) Titulaire: IFP Energies nouvelles, 92500 Rueil-Malmaison (FR)
(72) Inventeur: BOUALLEG, Malika, 69100 Villeurbanne (FR); BOUVRY, Céline, 92500 Rueil-Malmaison (FR)
(74) Mandataire: IFP Energies nouvelles
(86) Numéro de dépôt international: PCT/EP2015/062828
(87) Numéro de publication internationale: WO 2015/189202

(56) Documents cités:
- CN-A- 101 993 102
- GB-A- 967 902
- RENUKA N K ET AL: "Mesoporous -alumina nanoparticles: Synthesis, characterization and dye removal efficiency", MATERIALS LETTERS, NORTH HOLLAND PUBLISHING COMPANY. AMSTERDAM, NL, vol. 82, 12 mai 2012 (2012-05-12), pages 42-44, XP028500490, ISSN: 0167-577X, DOI: 10.1016/J.MATLET.2012.05.043 [extrait le 2012-05-19]
- CHANGMOOK KIM ET AL: "Synthesis of mesoporous alumina by using a cost-effective template", KOREAN JOURNAL OF CHEMICAL ENGINEERING, vol. 20, no. 6, 1 novembre 2003 (2003-11-01), pages 1142-1144, XP055168320, ISSN: 0256-1115, DOI: 10.1007/BF02706951

## Description

### Domaine technique

La présente invention se rapporte à la préparation d'une alumine mésoporeuse amorphe mise en forme à partir d'un gel d'alumine présentant une haute dispersibilité, ledit gel d'alumine étant obtenu par précipitation d'au moins un sel d'aluminium. En particulier, la présente invention se rapporte à la préparation d'une alumine mésoporeuse amorphe présentant une connectivité très élevée par rapport aux alumines de l'art antérieur. La présente invention se rapporte également au procédé de préparation de ladite alumine par mise en forme d'un gel d'alumine, ledit gel d'alumine étant préparée selon un procédé de préparation par précipitation spécifique, permettant l'obtention d'au moins 40% poids d'alumine par rapport à la quantité totale d'alumine formée à l'issue du procédé de préparation du gel, dès la première étape de précipitation, la quantité d'alumine formée à l'issue de la première étape de précipitation pouvant même atteindre 100%.

L'alumine préparé selon le procédé de l'invention, du fait de ses propriétés intéressantes notamment en terme de connectivité, peut être utilisée comme support de catalyseurs dans tous procédés de raffinage ainsi que comme adsorbant.

### Art antérieur

Le brevet US 4 676 928 décrit un procédé de production d'une alumine dispersible dans l'eau comprenant une étape de formation d'une dispersion aqueuse d'alumine, une étape d'ajout d'un acide pour produire une dispersion acide ayant un pH compris entre 5 et 9, une étape de maturation à une température élevée supérieure à 70°C pendant une durée suffisante pour transformer l'alumine en gel colloïdal, puis une étape de séchage dudit gel colloïdal obtenu.

Le brevet US 5 178 849 décrit un procédé de production d'une alumine alpha comprenant une étape de dispersion d'un hydrate d'aluminium ayant une dispersibilité inférieure à 70%, une étape d'acidification de la dispersion obtenue à un pH inférieur à 3,5 pour dissoudre au moins partiellement l'hydrate d'aluminium, une étape de traitement hydrothermal de la dispersion acide obtenue à une température comprise entre 150 et 200°C, une pression comprise entre 5 et 20 atm pendant une durée comprise entre 0,15 et 4 heures pour obtenir une boehmite colloïdale présentant une dispersibilité supérieure à 90%.

La préparation de gel d'alumine par précipitation est également bien connue dans l'art antérieur.

En particulier, le brevet US 7 790 652 décrit la préparation par précipitation d'un support alumine présentant une distribution poreuse bien spécifique, pouvant être utilisé comme support de catalyseur dans un procédé d'hydroconversion de charges hydrocarbonées lourdes.

Le support alumine est préparé selon une méthode comprenant une première étape de formation d'une dispersion d'alumine par le mélange, de manière contrôlée, d'une première solution aqueuse alcaline et d'une première solution aqueuse acide, au moins une desdites solutions acide et basiques, ou les deux comprenant un composé aluminique. Les solutions acide et basique sont mélangées dans des proportions telles que le pH de la dispersion résultante est compris entre 8 et 11. Les solutions acide et basique sont également mélangées dans des quantités permettant d'obtenir une dispersion contenant la quantité désirée d'alumine, en particulier, la première étape permet l'obtention de 25 à 35% poids d'alumine par rapport à la quantité totale d'alumine formée à l'issue des deux étapes de précipitation. La première étape opère à une température comprise entre 20 et 40°C. Quand la quantité d'alumine désirée est formée, la température de la suspension est augmentée à une température comprise entre 45 et 70°C, puis la suspension chauffée est ensuite soumise à une deuxième étape de précipitation par mise en contact de ladite suspension avec une seconde solution aqueuse alcaline et une seconde solution aqueuse acide, au moins l'une des deux solutions ou les deux comprenant un composé aluminique. De même, le pH est réglé entre 8 et 10,5 par les proportions des solutions acide et basique ajoutées et la quantité restante d'alumine a former dans la deuxième étape est apportée par les quantités des deuxièmes solutions acide et basique ajoutées. La deuxième étape opère à une température comprise entre 20 et 40°C. Le gel d'alumine ainsi formé comprend au moins 95% de boehmite. La dispersibilité du gel d'alumine ainsi obtenu n'est pas mentionnée. Le gel d'alumine est ensuite filtré, lavé et éventuellement séché selon les méthodes connues de l'homme du métier, sans étape de traitement thermique préalable, pour produire une poudre d'alumine qui est ensuite mise en forme selon les méthodes connues de l'homme du métier puis calciné pour produire le support alumine final.

La première étape de précipitation du procédé de préparation du brevet US 7 790 652 est limitée à une production d'alumine faible, comprise entre 25 et 35% poids, car une production d'alumine plus élevée à l'issue de la première étape ne permet pas une filtration optimale du gel obtenu. Par ailleurs, l'augmentation de la production d'alumine dans la première étape du brevet US 7 790 652 Shell ne permettrait pas la mise en forme du gel ainsi obtenu.

De manière surprenante, la demanderesse a découvert qu'un gel d'alumine spécifique présentant un taux de dispersibilité élevé, préparé selon un procédé comprenant au moins une étape de précipitation dans laquelle au moins 40% poids d'alumine en équivalent Al₂O₃ par rapport à la quantité totale d'alumine formée à l'issue dudit procédé de préparation du gel, sont formés dès la première étape de précipitation, et une étape de traitement thermique finale et en particulier une étape de mûrissement finale, pouvait être mis en forme pour obtenir une alumine mésoporeuse amorphe présentant une distribution poreuse spécifique ainsi qu'une connectivité très élevée.

Un objectif de la présente invention est de fournir grâce à la mise en oeuvre d'un procédé de préparation spécifique, une alumine mésoporeuse amorphe-présentant une connectivité très élevée.

En particulier, l'objectif de la présente invention est de fournir un procédé de préparation de ladite alumine par mise en forme d'un gel d'alumine présentant une dispersibilité élevée et en particulier supérieure à 70% ainsi qu'une taille de cristallite entre 2 et 35 nm.

### Résumé et intérêt de l'invention

Un avantage du procédé de préparation selon l'invention est de fournir une alumine dont la porosité est très connectée, c'est-à-dire présentant un nombre de pores adjacents très important. Une connectivité élevée représente un avantage important pour l'accessibilité de la porosité et joue un rôle important à la fois lors des étapes d'imprégnation de solutions de précurseurs de phases actives très visqueuses et pour la diffusion des molécules à traiter lors des réactions catalytiques utilisant ces matériaux.

La présente invention a pour objet un procédé de préparation de ladite alumine, ledit procédé comprenant au moins les étapes suivantes :
a) au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 40 et 100%, le taux d'avancement étant défini comme étant la proportion d'alumine formée en équivalent Al₂O₃ lors de ladite première étape de précipitation par rapport à la quantité totale d'alumine formée à l'issue de la ou des étapes de précipitation, ladite première étape de précipitation opérant à une température comprise entre 10 et 50 °C, et pendant une durée comprise entre 2 minutes et 30 minutes,
b) une étape de traitement thermique de la suspension obtenue à l'issue de l'étape a) à une température comprise entre 50 et 200°C pendant une durée comprise entre 30 minutes et 5 heures permettant l'obtention d'un gel d'alumine,
c) une étape de filtration de la suspension obtenue à l'issue de l'étape b) de traitement thermique, suivie d'au moins une étape de lavage du gel obtenu,
d) une étape de séchage du gel d'alumine obtenu à l'issue de l'étape c) pour obtenir une poudre,
e) une étape de mise en forme de la poudre obtenue à l'issue de l'étape d) pour obtenir le matériau cru,
f) une étape de traitement thermique du matériau cru obtenu à l'issue de l'étape e) à une température comprise entre 500 et 1000°C, en présence ou non d'un flux d'air contenant jusqu'à 60% en volume d'eau.

Un avantage de l'invention est de fournir un nouveau procédé de préparation d'une alumine mésoporeuse amorphe permettant la mise en forme d'un gel d'alumine préparé selon un procédé comprenant au moins une étape de précipitation dans laquelle au moins 40% poids d'alumine en équivalent Al₂O₃ par rapport à la quantité totale d'alumine formée à l'issue dudit procédé de préparation du gel, sont formés dès la première étape de précipitation, grâce à la mise en oeuvre d'une étape de traitement thermique et en particulier une étape de mûrissement permettant l'obtention d'un gel d'alumine présentant une filtrabilité améliorée, et facilitant sa mise en forme.

Un autre avantage de l'invention est de fournir un nouveau procédé de préparation d'une alumine par précipitation pouvant comprendre une seule étape de précipitation, peu coûteux par rapport aux procédés de préparation d'alumine classique de l'art antérieur tel que par exemple les procédés de préparation de type sol-gel.

Un autre avantage de l'invention est de fournir un nouveau procédé de préparation de l'alumine selon l'invention permettant l'obtention d'une alumine mésoporeuse amorphe présentant une distribution poreuse spécifique ainsi qu'une connectivité très élevée par rapport aux alumines de l'art antérieur.

### Définitions et méthodes de mesure.

Dans toute la suite du texte, l'indice de dispersibilité est défini comme le pourcentage en poids de gel d'alumine peptisée que l'on peut disperser par centrifugation dans un tube en polypropylène à 3600G pendant 10 min.

La dispersibilité est mesurée en dispersant 10% de boehmite ou gel d'alumine dans une suspension d'eau contenant également 10% d'acide nitrique par rapport à la masse de boehmite. Puis, on centrifuge la suspension à 3600G rpm pendant 10 min. Les sédiments recueillis sont séchés à 100°C une nuit puis pesés.

On obtient l'indice de dispersibilité, noté ID par le calcul suivant : ID(%)=100%-masse de sédiments séchés(%).

Dans toute la suite du texte, la connectivité de l'alumine selon l'invention est définie comme étant le nombre de pores adjacents à un pore donné. La connectivité selon l'invention est représentative de la totalité de la porosité de l'alumine et en particulier de la totalité de la mésoporosité de l'alumine, c'est-à-dire de la totalité des pores ayant un diamètre moyen compris entre 2 et 50 nm.

La connectivité est une grandeur relative mesurée selon la procédure décrite dans la publication de Seaton (Liu H., Zhang L., Seaton N.A., Chemical Engineering Science, 47, 17-18, pp.4393-4404, 1992). Il s'agit d'une simulation Monte-Carlo à partir des isothermes d'adsorption/désorption d'azote. Ces paramètres de connectivité sont basés sur la théorie de la percolation. La connectivité est relié aux nombres de pores adjacents et représente un avantage pour la diffusion lors des réactions catalytiques des molécules à traiter.

L'alumine préparé selon le procédé de la présente invention présente en outre une distribution poreuse spécifique, où les volumes macroporeux et mésoporeux sont mesurés par intrusion de mercure et le volume microporeux est mesuré par adsorption d'azote.

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est strictement inférieure à 2 nm.

Dans l'exposé qui suit de l'invention, la distribution poreuse mesurée par porosimétrie au mercure est déterminée par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage "Techniques de l'ingénieur, traité analyse et caractérisation, P 1050-5, écrits par Jean Charpin et Bernard Rasneur ».

On fixe à 0,2 MPa la valeur à partir de laquelle le mercure remplit tous les vides intergranulaires, et on considère qu'au-delà le mercure pénètre dans les pores de l'alumine.

Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Le volume macroporeux du catalyseur est défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux du catalyseur est défini comme étant le volume cumulé de mercure introduit à une pression comprise entre 30 MPa et 400 MPa, correspondant au volume contenu dans les pores de diamètre apparent compris entre 2 et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

On définit également le diamètre médian des mésopores (Dp en nm) comme étant un diamètre tel que tous les pores de taille inférieure à ce diamètre constituent 50% du volume mésoporeux, mesuré par porosimétrie au mercure.

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit de l'invention, on entend par volume adsorption azote, le volume mesuré pour P/P₀= 0,99, pression pour laquelle il est admis que l'azote a rempli tous les pores.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

### Description de l'invention

Conformément à l'invention, l'alumine mésoporeuse amorphe préparée selon le procédé de préparation de l'invention présente une connectivité supérieure à 2,7, de préférence comprise entre 2,7 et 10, de manière préférée comprise entre 2,8 et 10, de manière très préférée comprise entre 3 et 9, de manière plus préférée comprise entre 3 et 8 et de manière encore plus préférée comprise entre 3 et 7.

L'alumine préparée selon le procédé de préparation de l'invention présente avantageusement une surface spécifique BET et un volume poreux et en particulier mésoporeux calibrés.

De préférence, l'alumine mésoporeuse préparée selon l'invention est dépourvue de micropores. L'absence de micropores est mesurée et vérifiée par adsorption d'azote.

De préférence, l'alumine préparée selon l'invention présente avantageusement une surface spécifique BET comprise entre 50 et 450 m²/g, de préférence comprise entre 100 et 400 m²/g, de manière préférée comprise entre 150 et 400 m²/g, et de manière très préférée comprise entre 150 et 350 m²/g.

De préférence, l'alumine préparée selon l'invention présente avantageusement un volume mésoporeux supérieur ou égal à 0,5 ml/g, de préférence compris entre 0,6 et 0,8 ml/g.

Le volume mésoporeux est défini comme étant le volume compris dans les pores ayant un diamètre moyen compris entre 2 et 50 nm, bornes incluses.

De préférence, le volume poreux total de ladite alumine mesuré par porosimétrie au mercure est compris entre 0,6 et 0,9 ml/g.

De préférence, le pourcentage de volume compris dans les pores de taille comprise entre 2 et 50 nm par rapport au volume poreux total de ladite alumine, est supérieur à 50% et de préférence compris entre 50 à 75%.

De préférence, le pourcentage de volume compris dans les pores de taille supérieur à 50 nm par rapport au volume poreux total de ladite alumine, est inférieur à 10%, et de préférence inférieur à 6 %.

Le diamètre médian des mésopores mesuré par porosimétrie au mercure de ladite alumine, déterminé en volume est avantageusement compris entre 8 et 12,5 nm et de préférence entre 9,0 et 12,5 nm.

De préférence, l'alumine préparée selon l'invention est une alumine non mésostructurée.

L'objet de l'invention concerne le procédé de préparation de ladite alumine.

### Etape a) de précipitation

Conformément à l'invention, ledit procédé de préparation comprend au moins une première étape a) de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 40 et 100%, le taux d'avancement étant défini comme étant la proportion d'alumine formée en équivalent Al₂O₃ lors de ladite étape a) de précipitation par rapport à la quantité totale d'alumine formée à l'issue de la ou les étapes de précipitation et plus généralement à l'issue des étapes de préparation du gel d'alumine, ladite étape a) opérant à une température comprise entre 10 et 50 °C, et pendant une durée comprise entre 2 minutes et 30 minutes.

De manière générale, on entend par « taux d'avancement » de la n-ième étape de précipitation le pourcentage d'alumine formé en équivalent Al₂O₃ dans ladite n-ième étape, par rapport à la quantité totale d'alumine formée à l'issue de l'ensemble des étapes de précipitation et plus généralement à l'issue des étapes de préparation du gel d'alumine.

Dans le cas où le taux d'avancement de ladite étape a) de précipitation est de 100%, ladite étape a) de précipitation permet généralement l'obtention d'une suspension d'alumine ayant une concentration en Al₂O₃ comprise entre 20 et 100 g/l, de préférence entre 20 et 80 g/l, de manière préférée entre 20 et 50 g/l.

Le mélange dans le milieu réactionnel aqueux d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

De préférence, le ou les précurseur(s) basique(s) et acide(s) sont ajoutés dans ladite première étape de précipitation a) en solutions aqueuse.

De préférence, le milieu réactionnel aqueux est de l'eau.

De préférence, ladite étape a) opère sous agitation.

De préférence, ladite étape a) est réalisée en l'absence d'additif organique.

Les précurseurs acide et basique, qu'ils contiennent de l'aluminium ou pas, sont mélangées, de préférence en solution, dans le milieux réactionnel aqueux, dans des proportions telles que le pH de la suspension résultante est compris entre 8,5 et 10,5.

Conformément à l'invention, c'est le débit relatif des précurseurs acide et basique qu'ils contiennent de l'aluminium ou pas, qui est choisi de manière à obtenir un pH du milieu réactionnel compris entre 8,5 et 10,5.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,6 et 2,05.

Pour les autres précurseurs basique et acide, qu'ils contiennent de l'aluminium ou pas, les ratio massiques base/acide sont établis par une courbe de neutralisation de la base par l'acide. Une telle courbe est obtenue aisément par l'homme du métier.

De préférence, ladite étape a) de précipitation est réalisée à un pH compris entre 8,5 et 10 et de manière très préférée entre 8,7 et 9,9.

Les précurseurs acide et basique sont également mélangées dans des quantités permettant d'obtenir une suspension contenant la quantité désirée d'alumine, en fonction de la concentration finale en alumine à atteindre. En particulier, ladite étape a) permet l'obtention de 40 à 100% poids d'alumine en équivalent Al₂O₃ par rapport à la quantité totale d'alumine formée à l'issue de la ou les étapes de précipitation. Conformément à l'invention, c'est le débit du ou des précurseurs acide et basique contenant de l'aluminium qui est réglé de manière à obtenir un taux d'avancement de la première étape compris entre 40 et 100%.

De préférence, le taux d'avancement de ladite étape de précipitation a) est compris entre 40 et 99%, de préférence entre 45 et 90 % et de manière préférée entre 50 à 85%. Dans le cas où le taux d'avancement obtenu à l'issue de l'étape a) de précipitation est inférieur à 100%, une deuxième étape de précipitation est nécessaire de manière à augmenter la quantité d'alumine formée. Dans le cas où une deuxième étape de précipitation est mise en oeuvre, le taux d'avancement est défini comme étant la proportion d'alumine formée en équivalent Al₂O₃ lors de ladite étape a) de précipitation par rapport à la quantité totale d'alumine formée à l'issue des deux étapes de précipitation du procédé de préparation selon l'invention et plus généralement à l'issue des étapes de préparation du gel d'alumine.

Ainsi, en fonction de la concentration en alumine visée à l'issue de la ou des étapes de précipitation, de préférence comprise entre 20 et 100 g/l, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajouté dans le milieu réactionnel et du taux d'avancement requis pour la ou les étapes de précipitation.

Les débit du ou des précurseurs acide et/ou basique contenant de l'aluminium dépendent de la dimension du réacteur utilisé et ainsi de la quantité d'eau ajoutée dans le milieu réactionnel.

De préférence, ladite étape a) de précipitation est réalisée à une température comprise entre 10 et 45°C, de manière préférée entre 15 et 45 °C, de manière plus préférée entre 20 et 45°C et de manière très préférée entre 20 et 40°C.

Il est important que ladite étape a) de précipitation opère à basse température. Dans le cas où ledit procédé de préparation selon l'invention comprend deux étapes de précipitation, l'étape a) de précipitation est avantageusement réalisée à une température inférieure à la température de la deuxième étape de précipitation.

De préférence, ladite étape a) de précipitation est réalisée pendant une durée comprise entre 5 et 20 minutes, et de manière préférée de 5 à 15 minutes.

### Etape b) de traitement thermique

Conformément à l'invention, ledit procédé de préparation comprend une étape b) de traitement thermique de la suspension obtenue à l'issue de l'étape a) de précipitation, ladite étape de traitement thermique opérant à une température comprise entre 60 et 200°C pendant une durée comprise entre 30 minutes et 5 heures, pour obtenir le gel d'alumine.

De préférence, ladite étape b) de traitement thermique est une étape de mûrissement.

De préférence, ladite étape b) de traitement thermique opère à une température comprise entre 65 et 150°C, de préférence entre 65 et 130°C, de manière préférée entre 70 et 110°C, de manière très préférée entre 70 et 95°C.

De préférence, ladite étape b) de traitement thermique est mise en oeuvre pendant une durée comprise entre 40 minutes et 5 heures, de préférence entre 40 minutes et 3 heures et de manière préférée entre 45 minutes et 2 heures.

### Deuxième étape de précipitation optionnelle

Selon un mode de réalisation préféré, dans le cas où le taux d'avancement obtenu à l'issue de l'étape a) de précipitation est inférieur à 100%, ledit procédé de préparation comprend de préférence, une deuxième étape de précipitation a') après la première étape de précipitation.

Ladite deuxième étape de précipitation permet d'augmenter la proportion d'alumine produite.

Ladite deuxième étape de précipitation a') est avantageusement mise en oeuvre entre ladite première étape de précipitation a) et l'étape b) de traitement thermique.

Dans le cas où une deuxième étape de précipitation est mise en oeuvre, une étape de chauffage de la suspension obtenue à l'issue de l'étape a) de précipitation est avantageusement mise en oeuvre entre les deux étapes de précipitation a) et a').

De préférence, ladite étape de chauffage de la suspension obtenue à l'issue de l'étape a), mise en oeuvre entre ladite étape a) et la deuxième étape de précipitation a') opère à une température comprise entre 20 et 90°C, de préférence entre 30 et 80°C, de manière préférée entre 30 et 70°C et de manière très préférée entre 40 et 65°C.

De préférence, ladite étape de chauffage est mise en oeuvre pendant une durée comprise entre 7 et 45 minutes et de préférence entre 7 et 35 minutes.

Ladite étape de chauffage est avantageusement mise en oeuvre selon toutes les méthodes de chauffage connues de l'homme du métier.

Selon ledit mode de réalisation préféré, ledit procédé de préparation comprend une deuxième étape de précipitation de la suspension obtenue à l'issue de l'étape de chauffage, ladite deuxième étape opérant par ajout dans ladite suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 0 et 60%, le taux d'avancement étant défini comme étant la proportion d'alumine formée en équivalent Al₂O₃ lors de ladite deuxième étape de précipitation par rapport à la quantité totale d'alumine formée à l'issue des deux étapes de précipitation, plus généralement à l'issue des étapes de préparation du gel d'alumine et de préférence à l'issue de l'étape a') du procédé de préparation selon l'invention, ladite étape opérant à une température comprise entre 40 et 90 °C, et pendant une durée comprise entre 2 minutes et 50 minutes.

De même que dans la première étape de précipitation a), l'ajout dans la suspension chauffée, d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

De préférence, ladite deuxième étape de précipitation opère sous agitation.

De préférence, ladite deuxième étape est réalisée en l'absence d'additif organique.

Les précurseurs acide et basique, qu'ils contiennent de l'aluminium ou pas, sont mélangées, de préférence en solution, dans le milieux réactionnel aqueux, dans des proportions telles que le pH de la suspension résultante est compris entre 8,5 et 10,5.

De préférence, le ou les précurseur(s) basique(s) et acide(s) sont ajoutés dans ladite deuxième étape de précipitation a') en solutions aqueuse.

De même que dans l'étape a) de précipitation, c'est le débit relatif des précurseurs acide et basique qu'ils contiennent de l'aluminium ou pas, qui est choisi de manière à obtenir un pH du milieu réactionnel compris entre 8,5 et 10,5.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,6 et 2,05.

Pour les autres précurseurs basique et acide, qu'ils contiennent de l'aluminium ou pas, les ratio massique base/acide sont établis par une courbe de neutralisation de la base par l'acide. Une telle courbe est obtenue aisément par l'homme du métier.

De préférence, ladite deuxième étape de précipitation est réalisée à un pH compris entre 8,5 et 10 et de manière préférée entre 8,7 et 9,9.

Les précurseurs acide et basique sont également mélangés dans des quantités permettant d'obtenir une suspension contenant la quantité désirée d'alumine, en fonction de la concentration finale en alumine à atteindre. En particulier, ladite deuxième étape de précipitation permet l'obtention de 0 à 60% poids d'alumine en équivalent Al₂O₃ par rapport à la quantité totale d'alumine formée à l'issue des deux étapes de précipitation et de préférence à l'issue de l'étape a').

De même que dans l'étape a) de précipitation, c'est le débit du ou des précurseurs acide et basique contenant de l'aluminium qui est réglé de manière à obtenir un taux d'avancement de la deuxième étape compris entre 0 et 60%, le taux d'avancement étant défini comme la proportion d'alumine formée en équivalent Al₂O₃ lors de ladite deuxième étape de précipitation par rapport à la quantité totale d'alumine formée à l'issue des deux étapes de précipitation du procédé selon l'invention et de préférence à l'issue de l'étape a').

De préférence, le taux d'avancement de ladite deuxième étape de précipitation a) est compris entre 1 et 60, de préférence entre 10 et 55 % et de manière préféré entre 15 à 55%.

Ainsi, en fonction de la concentration en alumine visée à l'issue de la ou des étapes de précipitation, de préférence comprise entre 20 et 100 g/l, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajoutée dans le milieu réactionnel et du taux d'avancement requis pour chacune des étapes de précipitation.

De même que dans l'étape a) de précipitation, les débit du ou des précurseurs acide et/ou basique contenant de l'aluminium dépendant de la dimension du réacteur utilisé et ainsi de la quantité d'eau ajoutée dans le milieu réactionnel.

A titre d'exemple, si on travaille dans un réacteur de 3 l et que l'on vise 1l de suspension d'alumine de concentration finale en Al₂O₃ de 50 g/l, le taux d'avancement ciblé est de 50% en équivalent Al₂O₃ pour la première étape de précipitation. Ainsi, 50% de l'alumine totale doit être apportée lors de l'étape a) de précipitation. Les précurseurs d'alumines sont l'aluminate de sodium à une concentration de 155 g/l en Al₂O₃ et le sulfate d'aluminium à une concentration de 102 g/l en Al₂O_{3.} Le pH de précipitation de la première étape est fixée à 9,5 et la deuxième à 9. La quantité d'eau ajoutée dans le réacteur est de 622 ml.

Pour la première étape a) de précipitation opérant à 30°C et pendant 8 minutes, le débit de sulfate d'aluminium doit être de 10,5 ml/min et le débit d'aluminate de sodium est de 13,2 ml/min. Le ratio massique d'aluminate de sodium sur sulfate d'aluminium est donc de 1,91.

Pour la deuxième étape de précipitation, opérant à 70°C, pendant 30 minutes, le débit de sulfate d'aluminium doit être de 2,9 ml/min et le débit d'aluminate de sodium est de 3,5 ml/min. Le ratio massique d'aluminate de sodium sur sulfate d'aluminium est donc de 1,84.

De préférence, la deuxième étape de précipitation est réalisée à une température compris entre 40 et 80 °C, de manière préférée entre 45 et 70°C et de manière très préférée entre 50 et 70°C.

De préférence, la deuxième étape de précipitation est réalisée pendant une durée comprise entre 5 et 45 minutes, et de manière préférée de 7 à 40 minutes.

La deuxième étape de précipitation permet généralement l'obtention d'une suspension d'alumine ayant une concentration en Al₂O₃ comprise entre 20 et 100 g/l, de préférence entre 20 et 80 g/l, de manière préférée entre 20 et 50 g/l.

Dans le cas où ladite deuxième étape de précipitation est mise en oeuvre, ledit procédé de préparation comprend également avantageusement une deuxième étape de chauffage de la suspension obtenue à l'issue de ladite deuxième étape de précipitation à une température comprise entre 50 et 95°C et de préférence entre 60 et 90°C.

De préférence, ladite deuxième étape de chauffage est mise en oeuvre pendant une durée comprise entre 7 et 45 minutes.

Ladite deuxième étape de chauffage est avantageusement mise en oeuvre selon toutes les méthodes de chauffage connues de l'homme du métier.

Ladite deuxième étape de chauffage permet d'augmenter la température du milieu réactionnel avant de soumettre la suspension obtenue à l'étape b) de traitement thermique.

### Etape c) de filtration

Conformément à l'invention, le procédé de préparation d'alumine selon l'invention comprend également une étape c) de filtration de la suspension obtenue à l'issue de l'étape b) de traitement thermique, suivie d'au moins une étape de lavage du gel obtenu. Ladite étape de filtration est réalisée selon les méthodes connues de l'homme du métier.

La filtrabilité de la suspension obtenue à l'issue de l'étape a) de précipitation ou des deux étapes de précipitation est améliorée par la présence de ladite étape b) de traitement thermique finale de la suspension obtenue, ladite étape de traitement thermique favorisant la productivité du procédé selon l'invention ainsi qu'une extrapolation du procédé au niveau industriel.

Ladite étape de filtration est avantageusement suivie d'au moins une étape de lavage à l'eau et de préférence d'une à trois étapes de lavage, avec une quantité d'eau égale à la quantité de précipité filtré.

L'enchainement des étapes a) et c) et éventuellement de la deuxième étape de précipitation, de la deuxième étape de chauffage et de l'étape de filtration optionnelle, permet l'obtention d'un gel d'alumine spécifique présentant un indice de dispersibilité supérieur à 70%, une taille de cristallite comprise entre 1 à 35 nm, ainsi qu'une teneur en soufre comprise entre 0,001% et 2% poids et une teneur en sodium comprise entre 0,001% et 2 % poids, les pourcentages poids étant exprimés par rapport à la masse totale de gel d'alumine.

Le gel d'alumine ainsi obtenu présente un indice de dispersibilité compris entre 70 et 100%, de manière préférée entre 80 et 100%, de manière très préférée entre 85 et 100% et de manière encore plus préférée entre 90 et 100%.

De préférence, le gel d'alumine ainsi obtenu présente une taille de cristallites comprise entre 2 à 35 nm.

De préférence, le gel d'alumine ainsi obtenu comprend une teneur en soufre comprise entre 0,001 % et 1% poids, de manière préférée entre 0,001 et 0,40% poids, de manière très préférée entre 0,003 et 0,33 % poids, et de manière plus préférée entre 0,005 et 0,25 % poids.

De préférence, le gel d'alumine ainsi obtenu comprend une teneur en sodium comprise entre 0,001 % et 1% poids, de manière préférée entre 0,001 et 0,15 % poids, de manière très préférée entre 0,0015 et 0,10% poids, et 0,002 et 0,040 % poids.

En particulier, le gel d'alumine ou la boehmite sous forme de poudre préparé selon l'invention est composée de cristallites dont la taille, obtenue par la formule de Scherrer en diffraction des rayons X selon les directions cristallographiques (020) et (120) est respectivement comprise entre 2 et 20 nm et entre 2 et 35 nm.

De préférence, le gel d'alumine préparé selon l'invention présente une taille de cristallites selon la direction cristallographique (020) comprise entre 2 à 15 nm et une taille de cristallite selon la direction cristallographique (120) comprise entre 2 à 35 nm.

La diffraction des rayons X sur les gels d'alumine ou boehmites a été effectuée en utilisant la méthode classique des poudres au moyen d'un diffractomètre.

La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 Scherrer after sixty years: A survey and some new results in the détermination of crystallite size, J. I. Langford and A. J. C. Wilson.

Le gel d'alumine ainsi préparé et présentant un taux de dispersibilité élevé permet de faciliter l'étape de mise en forme dudit gel selon toutes les méthodes connues de l'homme du métier et en particulier par malaxage extrusion, par granulation et par la technique dite de l'oil drop selon la terminologie anglo-saxonne.

### Etape d) de séchage

Conformément à l'invention, le gel d'alumine obtenu à l'issue de l'étape c) de filtration, est séché dans une étape d) de séchage pour obtenir une poudre.

Ladite étape de séchage est avantageusement mise en oeuvre à une température comprise entre 20 et 50°C et pendant une durée comprise entre 1 jour et 3 semaines ou par atomisation.

Dans le cas où ladite étape d) de séchage est mise en oeuvre à une température comprise entre 20 et 50°C et pendant une durée comprise entre 1 jour et 3 semaines, ladite étape d) de séchage peut avantageusement être réalisée en étuve fermée et ventilée. de préférence ladite étape de séchage opère à une température comprise entre 25 et 40°C, et pendant une durée comprise entre 3 jours et deux semaines.

Dans le cas où ladite étape d) de séchage est mise en oeuvre par atomisation, le gâteau obtenu à l'issue de l'étape de traitement thermique éventuellement suivie d'un étape de filtration est remis en suspension. Ladite suspension est ensuite pulvérisée en fines gouttelettes, dans une enceinte cylindrique verticale au contact d'un courant d'air chaud afin d'évaporer l'eau selon le principe bien connu de l'homme du métier. La poudre obtenue est entrainée par le flux de chaleur jusqu'à un cyclone ou un filtre à manche qui vont séparer l'air de la poudre. De préférence, dans le cas où ladite étape d) de séchage est mise en oeuvre par atomisation, l'atomisation est réalisée selon le protocole opératoire décrit dans la publication Asep Bayu Dani Nandiyanto, Kikuo Okuyama, Advanced Powder Technology, 22, 1-19, 2011.

### Etape e) de mise en forme

Conformément à l'invention, la poudre obtenue à l'issue de l'étape d) de séchage est mise en forme dans une étape e) pour obtenir un matériau cru.

On entend par matériau cru, le matériau mis en forme et n'ayant pas subi d'étapes de traitement thermique.

De préférence, ladite étape e) de mise en forme est réalisée par malaxage extrusion, par pastillage, par la méthode de la coagulation en goutte (oil-drop), par granulation au plateau tournant ou par toute autre méthode bien connue de l'homme du métier.

De manière très préférée, ladite étape e) de mise en forme est réalisée par malaxage extrusion.

### Etape f) de traitement thermique

Conformément à l'invention, la matériau cru obtenu à l'issue de l'étape e) de mise en forme subit ensuite une étape f) de traitement thermique à une température comprise entre 500 et 1000°C, pendant une durée comprise entre 2 et 10 h, en présence ou non d'au flux d'air contenant jusqu'à 60% volume d'eau.

De préférence, ladite étape f) de traitement thermique opère à une température comprise entre 540°C et 850°C.

De préférence, ladite étape f) de traitement thermique opère pendant une durée comprise entre 2h et 10h.

Ladite étape f) de traitement thermique permet la transition de la boehmite vers l'alumine finale.

Le procédé de préparation selon l'invention permet l'obtention d'une alumine mésoporeuse amorphe présentant une connectivité supérieure à 2,7 et une mésoporosité contrôlée présentant une bonne stabilité thermique et chimique, ayant une distribution en taille des mésopores centrée, uniforme et contrôlée, et une surface spécifique et un volume poreux et en particulier mésoporeux calibrés. L'alumine mésoporeuse préparée selon le procédé de l'invention est dépourvue de micropores. Elle présente avantageusement une surface spécifique BET comprise entre 50 et 450 m²/g, et un volume mésoporeux supérieur ou égal à 0,5 ml/g, de préférence compris entre 0,6 et 0,8 ml/g.

L'invention est illustrée par les exemples suivants qui ne présentent, en aucun cas, un caractère limitatif.

### Exemples :

### Exemple 1 : (comparatif)

Une boehmite commerciale Pural SB3 est utilisée sous forme de poudre. La mise en forme de celle-ci est effectuée en première étape par un malaxage acide, avec une solution aqueuse d'acide (Ta : teneur en acide nitrique de 3% poids /masse sèche introduite dans le malaxage) pendant 0 à 60 min. Suit ensuite un malaxage basique taux de neutralisation (Tb : 50% poids /HNO₃). La pâte obtenue est extrudée à travers une filière de 2 mm trilobée. Les extrudés obtenus sont séchés à 100°C pendant une nuit, puis calcinés pendant 2 h à 600°C.

| Gel de départ | poudre commerciale |
|---|---|
| S_{BET}(m²/g) | 191 |
| VPT Hg (ml/g) | 0,51 |
| Dp (Hg) (nm) | 10,4 |
| Z | 2,3 |

### Exemple 2 (comparatif) :

On réalise la synthèse d'un gel d'alumine selon un procédé de préparation non-conforme en ce que le procédé de préparation selon l'exemple 2 ne comprend pas d'étape de traitement thermique de la suspension obtenue à l'issue des étapes de précipitation et en ce que la première étape de précipitation a) ne produit pas une quantité d'alumine supérieure à 40% par rapport à la quantité totale d'alumine formée à l'issue de la deuxième étape de précipitation. L'exemple 2 est réalisé selon le procédé de préparation décrit dans le brevet US 7 790 562.

La synthèse est réalisée dans un réacteur de 7L et une suspension finale de 5L en 2 étapes de précipitation. La quantité d'eau ajoutée dans le réacteur est de 3868 ml.

La concentration finale en alumine visée est de 30g/l.

Une première étape de co-précipitation de sulfate d'aluminium Al₂(SO₄) et d'aluminate de sodium NaAlOO est réalisée à 30°C et pH=9,3 pendant une durée de 8 minutes. Les concentrations des précurseurs d'aluminium utilisées sont les suivantes : Al₂(SO₄)= à 102g/l en Al₂O₃ et NaAlOO à 155g/l en Al₂O₃. L'agitation est de 350 rpm tout au long de la synthèse.

Une solution de sulfate d'aluminium Al₂(SO₄) est ajoutée en continu pendant 8 minutes à un débit de 19,6 ml/min à une solution d'aluminate de sodium NaAlOO selon un ratio massique base/acide = 1,80 de manière à ajuster le pH à une valeur de 9,3. La température du milieu réactionnel est maintenu à 30°C.

Une suspension contenant un précipité d'alumine est obtenue.

La concentration finale en alumine visée étant de 30g/l, le débit des précurseurs sulfate d'aluminium Al₂(SO₄) et aluminate de sodium NaAlOO contenant de l'aluminium introduit dans la première étape de précipitations sont respectivement de 19,6 ml/min et de 23,3 ml/min.

Ces débits de précurseurs acide et basique contenant de l'aluminium permettent d'obtenir à l'issue de la première étape de précipitation un taux d'avancement de 30%.

La suspension obtenue est ensuite soumise à une montée en température de 30 à 57°C.

Une deuxième étape de co-précipitation de la suspension obtenue est ensuite réalisée par ajout de sulfate d'aluminium Al₂(SO₄) à une concentration de 102 g/l en Al₂O₃ et d'aluminate de sodium NaAlOO à une concentration de 155 g/l en Al₂O₃. Une solution de sulfate d'aluminium Al₂(SO₄) est donc ajoutée en continu à la suspension chauffée obtenue à l'issue de la première étape de précipitation pendant 30 minutes à un débit de 12,8 ml/min à une solution d'aluminate de sodium NaAlOO selon un ratio massique base/acide = 1,68 de manière à ajuster le pH à une valeur de 8,7. La température du milieu réactionnel dans la deuxième étape est maintenue à 57°C.

Une suspension contenant un précipité d'alumine est obtenue.

La concentration finale en alumine visée étant de 30g/l, le débit des précurseurs sulfate d'aluminium Al₂(SO₄) et aluminate de sodium NaAlOO contenant de l'aluminium introduit dans la deuxième étape de précipitation sont respectivement de 12,8 ml/min et 14,1 ml/min.

Ces débits de précurseurs acide et basique contenant de l'aluminium permettent d'obtenir à l'issue de la deuxième étape de précipitation un taux d'avancement de 70%.

La suspension ainsi obtenue ne subit pas d'étape de mûrissement.

La suspension obtenue est ensuite filtrée par déplacement d'eau sur un outil type Buchner fritté et le gel d'alumine obtenu est lavé 3 fois avec 5 l d'eau distillée à 70°C. Le temps de filtration et de lavage est de 4 h.

Les caractéristiques du gel d'alumine ainsi obtenu sont résumées dans le tableau 2.

**Tableau 2 : caractéristiques du gel d'alumine obtenu selon l'exemple 2.**

| | Exemple 2 |
|---|---|
| Indice de dispersibilité Ta=10% (%) | 60 |
| Taille (020) (nm) | 2,9 |
| Taille (120) (nm) | 4,1 |
| Sodium Na (ppm) | 0,011 |
| Soufre S (ppm) | 0,057 |
| Temps de filtration | 4 h |

Le gel d'alumine est ensuite séché par atomisation avec une température d'entrée de 250°C et de sortie de 130°C.

Le gel d'alumine séché est introduit dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 5 minutes pendant un malaxage à 20 tours/min. Le malaxage acide est poursuivi pendant 15 minutes. Une étape de neutralisation est ensuite réalisée par ajout d'une solution ammoniacale dans le malaxeur, à un taux de neutralisation de 50%, exprimé en poids d'ammoniaque par rapport à la quantité d'acide nitrique introduit dans le malaxeur pour l'étape d'acidification. Le malaxage est poursuivi pendant 3 minutes.

La pâte obtenue est ensuite extrudée à travers une filière de 2 mm trilobée. Les extrudés obtenus sont séchés à 100°C pendant une nuit puis calcinés pendant 2 h à 600°C.

Les caractéristiques de l'alumine formée sont reportées dans le tableau 3 :

**Tableau 3 : caractéristiques de l'alumine obtenu selon l'exemple 2.**

| | Exemple 2 |
|---|---|
| S_{BET}(m²/g) | 230 |
| VPT (Hg) (ml/g) | 0,78 |
| Dp (Hg) (nm) | 11,9 |
| Z | 2,5 |

### Exemple 3 (comparatif) :

On réalise la synthèse d'alumine selon un procédé de préparation non conforme à l'invention en ce que l'étape de précipitation est réalisée à haute température, c'est-à-dire à une température de 60°C. L'agitation est de 350 rpm tout au long de la synthèse.

La synthèse est réalisée dans un réacteur de 5 l et comprend une seule étape de précipitation et une étape de murissement de la suspension obtenue.

La concentration finale en alumine visée est de 50 g/l.

Une étape de précipitation de sulfate d'aluminium Al₂(SO₄) et d'aluminate de sodium NaAlOO est réalisée à 60°C et pH=10,2 pendant une durée de 20 minutes. Les concentrations des précurseurs d'aluminium utilisées sont les suivantes : Al₂(SO₄)= à 102 g/l en Al₂O₃ et NaAlOO à 155 g/l en Al₂O₃

Une solution de sulfate d'aluminium Al₂(SO₄) est ajoutée en continu pendant 30 minutes à un débit de 25,9 ml/min à une solution d'aluminate de sodium NaAlOO selon un ratio massique base/acide = 2,0 de manière à ajuster le pH à une valeur de 10,2. La totalité des précurseurs est mis en contact à une température de 60°C.

Une suspension contenant un précipité d'alumine est obtenue.

La concentration finale en alumine visée étant de 50 g/l, le débit des précurseurs sulfate d'aluminium Al₂(SO₄) et aluminate de sodium NaAlOO contenant de l'aluminium introduit dans la première étape de précipitations sont respectivement de 25,9 ml/min et de 34,1 ml/min.

Ces débits de précurseurs acide et basique contenant de l'aluminium permettent d'obtenir à l'issue de la première étape de précipitation un taux d'avancement de 100%.

La suspension obtenue est ensuite soumise à une montée en température de 60 à 90°C.

La suspension subit ensuite une étape de mûrissement dans laquelle elle est maintenue à 90°C pendant 60 minutes.

La suspension obtenue est ensuite filtrée par déplacement d'eau sur un outil type Buchner fritté et le gel d'alumine obtenu est lavé 3 fois avec 3,5 l d'eau distillée à 70°C. Le temps de filtration et de lavage est de 3h.

Les caractéristiques du gel d'alumine ainsi obtenu sont résumées dans le tableau 4.

**Tableau 4 : caractéristiques du gel d'alumine obtenu selon l'exemple 3.**

| | Exemple 3 |
|---|---|
| Indice de dispersibilité Ta (10% (%)) | 0 |
| Taille (020) (nm) | 2,9 |
| Taille (120) (nm) | 3,4 |
| Sodium Na (%) | 0,0068 |
| Soufre S (%) | 0,042 |
| Temps de filtration | 3h |

Le gel d'alumine est ensuite séché par atomisation avec une température d'entrée de 250°C et de sortie de 130°C.

Le gel d'alumine séché est ensuite introduit dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 5 minutes, pendant un malaxage à 20 tours/min. Le malaxage acide est poursuivi pendant 15 minutes.

Aucune pâte cohésive n'est obtenue. Aucun extrudé d'alumine n'a donc pu être obtenu et la mesure de la connectivité n'a pas pu être réalisée.

L'exemple 3 non-conforme à l'invention met en évidence l'importance d'opérer lors de l'étape de précipitation à basse température et en particulier lors de la première étape de précipitation. Ainsi, une étape de précipitation réalisée à une température de 70°C, en dehors des gammes revendiquées, ne permet pas l'obtention d'un gel dispersible. Au contraire, la dispersion de 10% du gel d'alumine ainsi obtenu dans une suspension d'eau contenant également 10% d'acide nitrique par rapport à la masse de gel d'alumine, puis la centrifugation de la suspension à 3600G pendant 10 min, mène à 100% de sédiments.

Ainsi, le procédé de préparation selon l'exemple 3 opérant à haute température dans l'étape de précipitation ne permet pas la mise en forme du gel d'alumine obtenu et ne permet donc pas l'obtention d'extrudés d'alumine.

### Exemple 4 : (selon l'invention) :

On réalise la synthèse d'alumine selon un procédé de préparation conforme à l'invention dans un réacteur de 7 l et une suspension finale de 5L en 3 étapes, deux étapes de précipitation suivie d'une étape de mûrissement.

La concentration finale en alumine visée est de 45g/l. La quantité d'eau ajoutée dans le réacteur est de 3267 ml. L'agitation est de 350 rpm tout au long de la synthèse.

Une première étape de co-précipitation dans de l'eau, de sulfate d'aluminium Al₂(SO₄) et d'aluminate de sodium NaAlOO est réalisée à 30°C et pH=9,5 pendant une durée de 8 minutes. Les concentrations des précurseurs d'aluminium utilisées sont les suivantes : Al₂(SO₄)= à 102g/l en Al₂O₃ et NaAlOO à 155 g/l en Al₂O₃

Une solution de sulfate d'aluminium Al₂(SO₄) est ajoutée en continu pendant 8 minutes à un débit de 69,6 ml/min à une solution d'aluminate de sodium NaAlOO à un débit de 84,5 ml/min selon un ratio massique base/acide = 1,84 de manière à ajuster le pH à une valeur de 9,5. La température du milieu réactionnel est maintenu à 30°C.

Une suspension contenant un précipité d'alumine est obtenue.

La concentration finale en alumine visée étant de 45g/l, le débit des précurseurs sulfate d'aluminium Al₂(SO₄) et aluminate de sodium NaAlOO contenant de l'aluminium introduit dans la première étape de précipitations sont respectivement de 69,6 ml/min et 84,5 ml/min.

Ces débits de précurseurs acide et basique contenant de l'aluminium permettent d'obtenir à l'issue de la première étape de précipitation un taux d'avancement de 72%.

La suspension obtenue est ensuite soumise à une montée en température de 30 à 68°C.

Une deuxième étape de co-précipitation de la suspension obtenue est ensuite réalisée par ajout de sulfate d'aluminium Al₂(SO₄) à une concentration de 102g/l en Al₂O₃ et d'aluminate de sodium NaAlOO à une concentration de 155g/L en Al₂O₃. Une solution de sulfate d'aluminium Al₂(SO₄) est donc ajoutée en continu à la suspension chauffée obtenue à l'issue de la première étape de précipitation pendant 30 minutes à un débit de 7,2 ml/min à une solution d'aluminate de sodium NaAlOO selon un ratio massique base/acide = 1,86 de manière à ajuster le pH à une valeur de 9. La température du milieu réactionnel dans la deuxième étape est maintenu à 68°C.

Une suspension contenant un précipité d'alumine est obtenue.

La concentration finale en alumine visée étant de 45g/L, le débit des précurseurs sulfate d'aluminium Al₂(SO₄) et aluminate de sodium NaAlOO contenant de l'aluminium introduit dans la deuxième étape de précipitations sont respectivement de 7,2 ml/min et de 8,8 ml/min.

Ces débits de précurseurs acide et basique contenant de l'aluminium permettent d'obtenir à l'issue de la deuxième étape de précipitation un taux d'avancement de 28%.

La suspension obtenue est ensuite soumise à une montée en température de 68 à 90°C.

La suspension subit ensuite une étape de traitement thermique dans laquelle elle est maintenue à 90°C pendant 60 minutes.

La suspension obtenue est ensuite filtrée par déplacement d'eau sur un outil type Buchner fritté et le gel d'alumine obtenu est lavé 3 fois avec 5 l d'eau distillée. Le temps de filtration ainsi que les lavages est de 3h.

Les caractéristiques du gel d'alumine ainsi obtenu sont résumées dans le tableau 5.

**Tableau 5 : caractéristiques du gel d'alumine obtenu selon l'exemple 4.**

| | Exemple 4 : |
|---|---|
| Indice de dispersibilité Ta=10% (%) | 100 |
| Taille (020) (nm) | 2,8 |
| Taille (120) (nm) | 3,5 |
| Sodium Na (%) | 0,074 |
| Soufre S (%) | 0,0364 |
| Temps de filtration | 3h |

Un gel présentant un indice de dispersibilité de 100% est ainsi obtenu.

Le gel d'alumine obtenu est ensuite séché par atomisation avec une température d'entrée de 250°C et de sortie de 130°C. Le gel séché par atomisation est appelé Gel n°1.

Le gel d'alumine obtenu selon l'exemple 4 a également été séché dans une étude ventilée à 35°C pendant 4 jours. Le gel séché en étuve est appelé Gel n°2.

Les gels d'alumine séchés n°1 et 2 sont ensuite respectivement introduits dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 5 minutes, pendant un malaxage à 20 tours/min. Le malaxage acide est poursuivi pendant 15 minutes. Une étape de neutralisation est ensuite réalisée par ajout d'une solution ammoniacale dans le malaxeur, à un taux de neutralisation de 50%, exprimé en poids d'ammoniaque par rapport à la quantité d'acide nitrique introduit dans le malaxeur pour l'étape d'acidification. Le malaxage est poursuivi pendant 3 minutes.

La pâte obtenue est ensuite extrudée à travers une filière de 2 mm trilobée. Les extrudés obtenus sont séchés à 100°C pendant une nuit puis calcinés pendant 2 h à 600°C.

Les caractéristiques de l'alumine formée sont reportées dans le tableau 6 :

**Tableau 6 : caractéristiques du gel d'alumine obtenu selon l'exemple 4.**

| Gel | N°1 | N°2 |
|---|---|---|
| Temp. séchage | Atomisation | 35°C |
| S_{BET}(m²/g) | 289 | 292 |
| VPT (Hg) (ml/g) | 0,68 | 0,69 |
| Dp (Hg) (nm) | 9,7 | 9,8 |
| Z | 6,5 | 6 |

L'étape de traitement thermique du gel obtenu selon le procédé de préparation selon l'invention permet une bonne filtrabilité du gel c'est-à-dire un temps de filtration compatible avec une extrapolation au niveau industriel du procédé, permettant ainsi une meilleure productivité dudit procédé.

Par ailleurs, le procédé de préparation selon l'invention permet la mise en forme d'un gel d'alumine dans lequel 70% poids d'alumine par rapport à la quantité totale d'alumine formée à l'issue dudit procédé de préparation sont formés dès la première étape de précipitation.

Les extrudés d'alumine obtenus présentent une connectivité très élevée quel que soit le mode de séchage utilisé.

### Exemple 5 (comparatif) :

L'exemple 5 non conforme à l'invention est réalisée de la même manière et dans les mêmes conditions opératoires que l'exemple 4 selon l'invention à la différence près que la suspension obtenue à l'issue de la deuxième étape de précipitation ne subit pas d'étape de mûrissement.

La suspension obtenue à l'issue de la deuxième étape de précipitation est filtrée par déplacement d'eau sur un outil type Buchner fritté et le gel d'alumine obtenu est lavé 3 fois avec 3,5l d'eau distillée.

Le temps de filtration et de lavage est de 24 h.

Les caractéristiques du gel d'alumine ainsi obtenu sont résumées dans le tableau 7.

**Tableau 7 : caractéristiques du gel d'alumine obtenu selon l'exemple 5.**

| | Exemple 5 : |
|---|---|
| Indice de dispersibilité Ta=10% (%) | 100 |
| Taille (020) (nm) | 2,8 |
| Taille (120) (nm) | 3,5 |
| Sodium Na (%) | 0,442 |
| Soufre S (%) | 0,0284 |
| Temps de filtration | 24h |

Le gel d'alumine ainsi obtenu n'a pas pu être mis en forme. En effet un séchage à l'étuve à 120°C conduit à une poudre impossible à mettre en forme par malaxage extrusion ou oil drop.

L'exemple 5 non-conforme à l'invention met en évidence l'importance de la mise en oeuvre de l'étape de traitement thermique entre l'étape de précipitation et l'étape de séchage du gel obtenu.

## Revendications

1. Procédé de préparation d'une alumine mésoporeuse amorphe présentant une connectivité (Z) supérieure à 2,7, la connectivité étant déterminée à partir des isothermes d'adsorption/désorption d'azote , ledit procédé comprenant au moins les étapes suivantes :
a) au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 40 et 100%, le taux d'avancement étant défini comme étant la proportion d'alumine formée en équivalent Al₂O₃ lors de ladite première étape de précipitation par rapport à la quantité totale d'alumine formée à l'issue de la ou les étapes de précipitation, ladite première étape de précipitation opérant à une température comprise entre 10 et 50 °C, et pendant une durée comprise entre 2 minutes et 30 minutes,
b) une étape de traitement thermique de la suspension obtenue à l'issue de l'étape a), à une température comprise entre 50 et 200°C pendant une durée comprise entre 30 minutes et 5 heures,
c) une étape de filtration de la suspension obtenue à l'issue de l'étape b) de traitement thermique, suivie d'au moins une étape de lavage du gel obtenu,
d) une étape de séchage du gel d'alumine obtenu à l'issue de l'étape c) pour obtenir une poudre,
e) une étape de mise en forme de la poudre obtenue à l'issue de l'étape d) pour obtenir le matériau cru,
f) une étape de traitement thermique du matériau cru obtenu à l'issue de l'étape e) à une température comprise entre 500 et 1000°C, en présence ou non d'au flux d'air contenant jusqu'à 60% en volume d'eau.

2. Procédé selon la revendication 1 dans lequel le précurseur basique est l'aluminate de sodium.

3. Procédé de préparation selon l'une des revendications 1 ou 2 dans lequel le précurseur acide est le sulfate d'aluminium.

4. Procédé de préparation selon l'une des revendications 1 à 3 dans lequel le ratio massique dudit précurseur basique sur ledit précurseur acide est compris entre 1,6 et 2,05.

5. Procédé de préparation selon l'une des revendications 1 à 4 dans lequel le taux d'avancement de ladite étape de précipitation a) est compris entre 45 et 90 %.

6. Procédé de préparation selon l'une des revendications 1 à 5 dans lequel, dans le cas où le taux d'avancement obtenu à l'issue de la première étape a) de précipitation est inférieur à 100%, ledit procédé de préparation comprend une deuxième étape de précipitation a') après la première étape de précipitation.

7. Procédé de préparation selon la revendication 6 dans lequel une étape de chauffage de la suspension obtenue à l'issue de l'étape a) de précipitation est mise en oeuvre entre les deux étapes de précipitation a) et a'), ladite étape de chauffage opérant à une température comprise entre 20 et 90°C et pendant une durée comprise entre 7 et 45 minutes.

8. Procédé de préparation selon l'une des revendications 6 ou 7 dans lequel ladite deuxième étape de précipitation a') de la suspension obtenue à l'issue de l'étape de chauffage, opère par ajout dans ladite suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 0 et 60%, ledit taux d'avancement de la deuxième étape étant défini comme étant la proportion d'alumine formée en équivalent Al₂O₃ lors de ladite deuxième étape de précipitation a') par rapport à la quantité totale d'alumine formée à l'issue de l'étape a') du procédé de préparation, ladite deuxième étape a') opérant à une température comprise entre 40 et 90 °C, et pendant une durée comprise entre 2 minutes et 50 minutes.

9. Procédé de préparation selon la revendication 8 dans lequel le ratio massique dudit précurseur basique sur ledit précurseur acide est compris entre 1,6 et 2,05, les précurseurs basique et acide étant respectivement l'aluminate de sodium et le sulfate d'aluminium.

10. Procédé de préparation selon l'une des revendications 8 ou 9 dans lequel la deuxième étape de précipitation a') est réalisée à une température compris entre 45 et 70°C.

## Patentansprüche

1. Verfahren zur Herstellung eines amorphen mesoporösen Aluminiumoxids, das eine Konnektivität (Z) größer als 2,7 aufweist, wobei die Konnektivität auf Basis der Stickstoff-Adsorptions-/Desorptions-Isotherme bestimmt wird, wobei das Verfahren mindestens die folgenden Schritte umfasst:
a) mindestens einen ersten Schritt der Ausfällung von Aluminiumoxid in einem wässrigen Reaktionsmedium mindestens einer basischen Vorstufe, ausgewählt unter Natriumaluminat, Kaliumaluminat, Ammoniak, Natriumhydroxid und Kaliumhydroxid, und mindestens einer sauren Vorstufe, ausgewählt unter Aluminiumsulfat, Aluminiumchlorid, Aluminiumnitrat, Schwefelsäure, Salzsäure und Salpetersäure, bei dem mindestens eine der basischen oder sauren Vorstufen Aluminium umfasst, die relative Menge der sauren und basischen Vorstufen gewählt ist, um einen pH-Wert des Reaktionsmediums zwischen 8,5 und 10,5 zu erhalten, und die Menge der sauren oder basischen Vorstufe(n), die Aluminium enthalten, derart eingestellt ist, dass eine Fortschrittsrate des ersten Schritts zwischen 40 und 100 % erzielt wird, wobei die Fortschrittsrate als das Verhältnis von Aluminiumoxid, das als Äquivalent Al₂O₃ im ersten Ausfällungsschritt gebildet wird, zu der Gesamtmenge an Aluminiumoxid, das nach dem oder den Ausfällungsschritten gebildet wird, definiert ist, wobei der erste Ausfällungsschritt bei einer Temperatur zwischen 10 und 50 °C und während einer Dauer zwischen 2 Minuten und 30 Minuten durchgeführt wird,
b) einen Schritt der Wärmebehandlung der nach dem Schritt a) erhaltenen Suspension bei einer Temperatur zwischen 50 und 200 °c während einer Dauer zwischen 30 Minuten und 5 Stunden,
c) einen Schritt der Filterung der nach dem Schritt b) der Wärmebehandlung erhaltenen Suspension, gefolgt von mindestens einem Schritt des Waschens des erhaltenen Gels,
d) einen Schritt des Trocknens des nach dem Schritt c) erhaltenen Aluminiumoxidgels, um ein Pulver zu erhalten,
e) einen Schritt des Formens des nach dem Schritt d) erhaltenen Pulvers, um das Rohmaterial zu erhalten,
f) einen Schritt der Wärmebehandlung des nach dem Schritt e) erhaltenen Rohmaterials bei einer Temperatur zwischen 500 und 1000 °C im Beisein oder nicht eines Luftstroms, der bis zu 60 Volumen-% Wasser enthält.

2. Verfahren nach Anspruch 1, bei dem die basische Vorstufe Natriumaluminat ist.

3. Herstellungsverfahren nach einem der Ansprüche 1 oder 2, bei dem die saure Vorstufe Aluminiumsulfat ist.

4. Herstellungsverfahren nach einem der Ansprüche 1 bis 3, bei dem das Massenverhältnis der basischen Vorstufe zu der sauren Vorstufe zwischen 1,6 und 2,05 beträgt.

5. Herstellungsverfahren nach einem der Ansprüche 1 bis 4, bei dem die Fortschrittsrate des Ausfällungsschritts a) zwischen 45 und 90 % beträgt.

6. Herstellungsverfahren nach einem der Ansprüche 1 bis 5, bei dem, falls die erzielte Fortschrittsrate nach dem ersten Ausfällungsschritt a) kleiner als 100 % ist, das Herstellungsverfahren einen zweiten Ausfällungsschritt a') nach dem ersten Ausfällungsschritt umfasst.

7. Herstellungsverfahren nach Anspruch 6, bei dem ein Schritt der Erhitzung der nach dem Ausfällungsschritt a) erhaltenen Suspension zwischen den zwei Ausfällungsschritten a) und a') eingesetzt wird, wobei der Erhitzungsschritt bei einer Temperatur zwischen 20 und 90 °C und während einer Dauer zwischen 7 und 45 Minuten durchgeführt wird.

8. Herstellungsverfahren nach einem der Schritte 6 oder 7, bei dem der zweite Ausfällungsschritt a') der nach dem Erhitzungsschritt erhaltenen Suspension durch Hinzufügen zu der Suspension mindestens einer basischen Vorstufe, ausgewählt unter Natriumaluminat, Kaliumaluminat, Ammoniak, Natriumhydroxid und Kaliumhydroxid, und mindestens einer sauren Vorstufe, ausgewählt unter Aluminiumsulfat, Aluminiumchlorid, Aluminiumnitrat, Schwefelsäure, Salzsäure und Salpetersäure, durchgeführt wird, wobei mindestens eine der basischen oder sauren Vorstufen Aluminium umfasst, wobei die relative Menge der sauren und basischen Vorstufen gewählt ist, um einen pH-Wert des Reaktionsmediums zwischen 8,5 und 10,5 zu erhalten, und die Menge der sauren oder basischen Vorstufe(n), die Aluminium enthalten, derart eingestellt ist, dass eine Fortschrittsrate des zweiten Schritts zwischen 0 und 60 % erzielt wird, wobei die Fortschrittsrate des zweiten Schritts als das Verhältnis von Aluminiumoxid, das als Äquivalent Al₂O₃ im zweiten Ausfällungsschritt a') gebildet wird, zu der Gesamtmenge an Aluminiumoxid, das nach dem Schritt a') des Herstellungsverfahrens gebildet wird, definiert ist, wobei der zweite Ausfällungsschritt a') bei einer Temperatur zwischen 40 und 90 °C und während einer Dauer zwischen 2 Minuten und 50 Minuten durchgeführt wird.

9. Herstellungsverfahren nach Anspruch 8, bei dem das Massenverhältnis der basischen Vorstufe zur sauren Vorstufe zwischen 1,6 und 2,05 beträgt, wobei die basischen und sauren Vorstufen Natriumaluminat bzw. Aluminiumsulfat sind.

10. Herstellungsverfahren nach einem der Ansprüche 8 oder 9, bei dem der zweite Ausfällungsschritt a') bei einer Temperatur zwischen 45 und 70 °C durchgeführt wird.

## Claims

1. Process for preparing an amorphous mesoporous alumina having a connectivity (Z) greater than 2.7, the connectivity being determined from nitrogen adsorption/desorption isotherms, the said process comprising at least the following steps:
a) at least one first alumina precipitation step, in an aqueous reaction medium, of at least one basic precursor selected from sodium aluminate, potassium aluminate, ammonia, sodium hydroxide and potassium hydroxide, and at least one acidic precursor selected from aluminium sulphate, aluminium chloride, aluminium nitrate, sulphuric acid, hydrochloric acid, and nitric acid, in which at least one of the basic or acidic precursor comprises aluminium, the relative flow rate of the acidic and basic precursors is chosen so as to obtain a pH of the reaction medium between 8.5 and 10.5, and the flow rate of the acidic and basic precursor or precursors containing aluminium is regulated so as to obtain a rate of progress of the said first step between 40 and 100%, the rate of progress being defined as the proportion of alumina formed as Al₂O₃ equivalent during the first precipitation step with respect to the total amount of alumina formed at the end of the precipitation step or steps, the said first precipitation step being carried out at a temperature between 10 and 50°C and for a period between 2 minutes and 30 minutes,
b) a heat treatment step of the suspension obtained at the end of the step a), at a temperature between 50 and 200°C for a period between 30 minutes and 5 hours,
c) a filtration step of the suspension obtained at the end of the heat treatment step b), followed by at least one washing step of the obtained gel,
d) a drying step of the alumina gel obtained at the end of the step c) so as to obtain a powder,
e) a moulding step of the powder obtained at the end of the step d) so as to obtain the crude material,
f) a heat treatment step of the crude material obtained at the end of the step e) at a temperature between 500 and 1000°C, in the presence or otherwise of a stream of air containing up to 60% by volume of water.

2. Process according to claim 1, in which the basic precursor is sodium aluminate.

3. Preparation process according to one of claims 1 or 2, in which the acidic precursor is aluminium sulphate.

4. Preparation process according to one of claims 1 to 3, in which the mass ratio of the said basic precursor to the said acidic precursor is between 1.6 and 2.05.

5. Preparation process according to one of claims 1 to 4, in which the rate of progress of the said precipitation step a) is between 45 and 90 %.

6. Preparation process according to one of claims 1 to 5, in which in the case where the rate of progress obtained at the end of the first precipitation step a) is less than 100%, the said preparation process comprises a second precipitation step a') after the first precipitation step.

7. Preparation process according to claim 6, in which a heating step of the suspension obtained at the end of the precipitation step a) is implemented between the two precipitation steps a) and a'), the said heating step being carried out at a temperature between 20 and 90°C and for a period of between 7 and 45 minutes.

8. Preparation process according to one of claims 6 or 7, in which the said second precipitation step a') of the suspension obtained at the end of the heating step is carried out by adding to the said suspension at least one basic precursor selected from sodium aluminate, potassium aluminate, ammonia, sodium hydroxide and potassium hydroxide and at least one acidic precursor selected from aluminium sulphate, aluminium chloride, aluminium nitrate, sulphuric acid, hydrochloric acid, and nitric acid, in which at least one of the basic or acidic precursors contains aluminium, the relative flow rate of the acidic and basic precursors is chosen so as to obtain a pH of the reaction medium between 8.5 and 10.5 and the flow rate of the acidic and basic precursor or precursors containing aluminium is regulated so as to obtain a rate of progress of the second step between 0 and 60%, the said rate of progress of the second step being defined as the proportion of alumina formed as Al₂O₃ equivalent during the said second precipitation step a') with respect to the total amount of alumina formed at the end of the step a') of the preparation process, the said second step a') being carried out at a temperature between 40 and 90°C, and for a period of between 2 minutes and 50 minutes.

9. Preparation process according to claim 8, in which the mass ratio of the said basic precursor to the said acidic precursor is between 1.6 and 2.05, the basic and acidic precursors being respectively sodium aluminate and aluminium sulphate.

10. Preparation process according to one of claims 8 or 9 in which the second precipitation step a') is carried out at a temperature between 45 and 70°C.
